# EUROPÄISCHE PATENTSCHRIFT

(11) **EP 1 066 468 B1**
(45) Veröffentlichungstag und Bekanntmachung des Hinweises auf die Patenterteilung: **31.03.2004**
(21) Anmeldenummer: 98966589.8
(22) Anmeldetag: 29.12.1998
(51) Int. Cl.: F02M 61/16

(54) **BRENNSTOFFEINSPRITZVENTIL**
FUEL INJECTION VALVE
SOUPAPE D'INJECTION DE CARBURANT

(30) Priorität: 25.03.1998 DE 19813020
(43) Veröffentlichungstag der Anmeldung: 10.01.2001
(73) Patentinhaber: ROBERT BOSCH GMBH, 70442 Stuttgart (DE)
(72) Erfinder: DALLMANN, Frank, D-70439 Stuttgart (DE); KEIM, Norbert, D-74369 Löchgau (DE); ETZEL, Dieter, D-71735 Eberdingen (DE)
(86) Internationale Anmeldenummer: PCT/DE1998/003805
(87) Internationale Veröffentlichungsnummer: WO 1999/049211

(56) Entgegenhaltungen:
- DE-A- 3 437 760
- DE-A- 4 218 943
- US-A- 4 621 771
- US-A- 4 899 699
- US-A- 5 044 561

## Beschreibung

### Stand der Technik

Die Erfindung geht aus von einem Brennstoffeinspritzventil nach der Gattung des Hauptanspruchs.

Aus der DE-OS 35 34 125 ist bereits ein Einspritzventil für Kraftstoffeinspritzanlagen für Brennkraftmaschinen bekannt, das einen Düsenkörper mit einer inneren Führungsbohrung aufweist, in der eine Ventilnadel axial bewegbar ist. An seinem stromabwärtigen Ende besitzt die Ventilnadel einen konisch verlaufenden Dichtabschnitt, der mit einer sich ebenfalls keglig verjüngenden Ventilsitzfläche des Düsenkörpers zusammenwirkt und so ein Sitzventil bildet. Nahe des kegligen Dichtabschnitts sind in einem unteren Führungsabschnitt der Ventilnadel über den Umfang verteilt mehrere Zumeßöffnungen eingearbeitet, welche gegenüber der Ventillängsachse so geneigt verlaufen, daß dem aus den Zumeßöffnungen in Richtung auf eine Abspritzöffnung austretenden Kraftstoff eine drallförmige Bewegung aufgezwungen wird. Die Zumeßöffnungen sind dabei als Nuten oder Bohrungen am oder nahe am äußeren Umfang der axial beweglichen Ventilnadel angeordnet.

Aus der US-PS 4,621,771 ist bereits ein Flüssigkeitsventil bekannt, mit dem Brennstoff in einem Brenner abgespritzt werden kann. Dieses Ventil weist eine Betätigungseinrichtung auf, mit der eine Ventilnadel axial bewegbar ist, wobei die Ventilnadel ein kugelförmiges Ventilschließglied aufweist. Außerdem hat das Ventil einen Ventilsitzkörper, an dem ein Ventilsitz ausgebildet ist, mit dem das Ventilschließglied zusammenwirkt. Geführt wird die Ventilnadel in einer inneren Längsöffnung eines teilweise konisch verlaufenden Einsatzkörpers, der Drallerzeugungsmittel für den Brennstoff stromaufwärts des Ventilsitzes hat. Der Einsatzkörper besitzt dabei an seinem stromabwärtigen Ende einen Drallbereich, der an seiner Außenkontur konisch ausgeformt ist und bis zu der Längsöffnung verlaufend mehrere schräg geneigte Drallöffnungen aufweist. Der Einsatzkörper dient ausschließlich der Führung der Ventilnadel sowie der drallbehafteten Zuführung von Brennstoff zum Ventilsitz. Eine Durchströmung des Einsatzkörpers mit Brennstoff wird durch die Größe der Führungsöffnung ausgeschlossen. Über eine im Ventilgehäuse eingeschraubte Befestigungshülse wird der Einsatzkörper gegen eine konische Sitzfläche des Ventilsitzkörpers gedrückt. Öffnungen in der Befestigungshülse sorgen dafür, dass der zuzuführende Brennstoff nur außerhalb des Einsatzkörpers entlang strömen kann.

Ein weiteres Brennstoffeinspritzventil mit einer elektromagnetisch betätigbaren Ventilnadel zum Öffnen und Schließen des Ventils ist aus der DE-OS 28 07 052 bekannt. Auch dieses Einspritzventil weist einen Düsenkörper als Teil eines Ventilgehäuses auf, an dessen stromabwärtigen Ende ein Ventilsitz vorgesehen ist. Die axial bewegliche Ventilnadel ist in einer inneren Bohrung einer hülsenförmigen Buchse geführt, welche passend in das Ventilgehäuse eingesteckt ist. Am unteren Ende der Buchse ist an einem Ringbund ein Ringkörper aufgepreßt, dessen Außendurchmesser kleiner als der Innendurchmesser des Ventilgehäuses ist. Mit seiner unteren Stirnfläche stützt sich der Ringkörper jedoch am Ventilgehäuse ab. Zwischen dem Ringkörper und einem Schließkopf der ventilnadel ist ein Drallraum gebildet. In den Drallraum tritt der Brennstoff über zwei in der Wandung des Ringkörpers eingebrachte und in den Drallraum tangential mündende Zumeßbohrungen aus einem äußeren Ringraum ein.

### Vorteile der Erfindung

Das erfindungsgemäße Brennstoffeinspritzventil mit den kennzeichnenden Merkmalen des Hauptanspruchs hat den Vorteil, daß auf besonders einfache Art und Weise sehr günstige Strömungswege für mit Drall zu beaufschlagenden Brennstoff geschaffen sind. Aufgrund der erfindungsgemäßen konstruktiven Ausbildung des Brennstoffeinspritzventils ergeben sich die Vorteile eines geringen Druckverlusts, eines gleichmäßigen und schnellen Strömungsanlaufs und eines sogenannten kurzen Vorstrahls (sehr schnelle Strahlaufbereitung), so daß sehr "saubere" Strahlbilder erzeugbar sind. Die konische Außenkontur des Drallbereichs des Dralleinsatzes sowie die zum Ventilsitz hin offenen Drallnuten garantieren, daß keine scharfen Umlenkungen der Strömung beim Austritt aus den Drallnuten in Richtung zum Ventilsitz auftreten. In vorteilhafter Weise folgt die Strömung sofort der (konischen) Sitzkontur. Außerdem liegt in günstiger Weise nur ein sehr kleines Drallkammervolumen vor. Neben dem bereits erwähnten kurzen, "gutmütigen" Strömungsverlauf, der eine sehr schnelle Strahlaufbereitung erlaubt, liegt bei dem erfindungsgemäßen Einspritzventil der Vorteil einer erhöhten Linearität der Abspritzmenge über die Abspritzzeit vor.

Weitere Vorteile liegen in der einfachen und kostengünstigen Herstellbarkeit des Dralleinsatzes. Durch eine Vergrößerung der Drallnuten können auch nachträglich noch auf recht einfache Weise Abspritzgrößen wie die statische Abspritzmenge und der Strahlwinkel verändert werden.

Durch die in den Unteransprüchen aufgeführten Maßnahmen sind vorteilhafte Weiterbildungen und Verbesserungen des im Hauptanspruch angegebenen Brennstoffeinspritzventils möglich.

Eine erhöhte Dichtheit im Bereich der konischen Wandung der Durchgangsöffnung des Ventilsitzkörpers und der konischen Außenkontur des Drallbereichs des Dralleinsatzes wird erzielt, wenn an der Außenkontur des Drallbereichs eine zur konischen Kontur abgewinkelte Dichtkante ausgebildet ist.

### Zeichnung

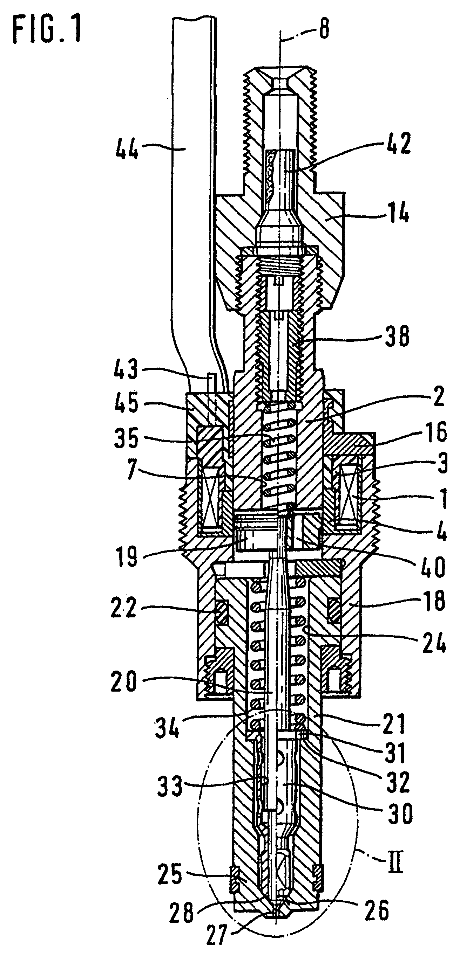

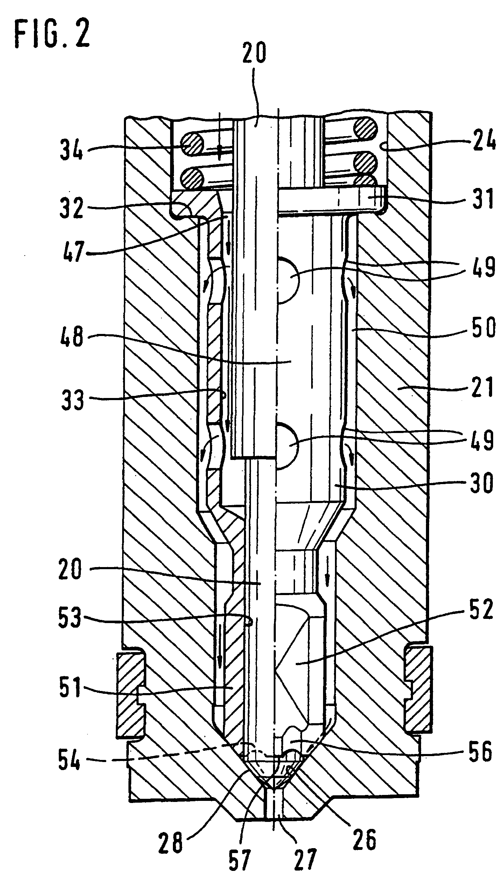

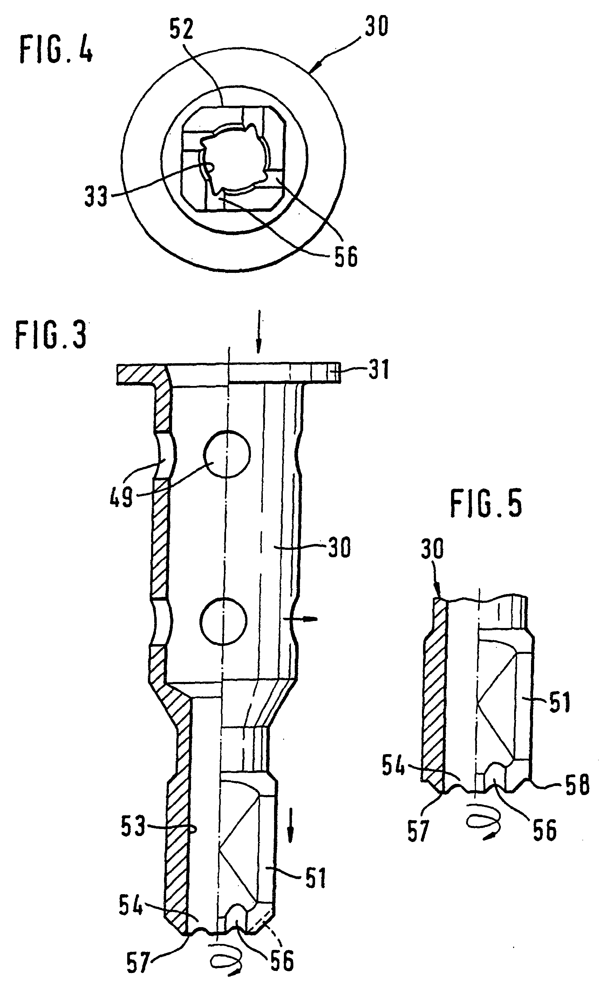

Ausführungsbeispiele der Erfindung sind in der Zeichnung vereinfacht dargestellt und in der nachfolgenden Beschreibung näher erläutert. Es zeigen Figur 1 ein Brennstoffeinspritzventil, Figur 2 den mit II in Figur 1 gekennzeichneten abspritzseitigen Endbereich des Brennstoffeinspritzventils in geändertem Maßstab, Figur 3 einen Dralleinsatz gemäß Figur 2 als Einzelbauteil, Figur 4 eine Unteransicht auf den Dralleinsatz in Figur 3 und Figur 5 eine alternative Ausführungsform des unteren Endes eines Dralleinsatzes.

### Beschreibung der Ausführungsbeispiele

Das in der Figur 1 beispielhaft dargestellte elektromagnetisch betätigbare Ventil in der Form eines Einspritzventils für Brennstoffeinspritzanlagen von gemischverdichtenden, fremdgezündeten Brennkraftmaschinen hat einen von einer Magnetspule 1 zumindest teilweise umgebenen, als Innenpol eines Magnetkreises dienenden, rohrförmigen, weitgehend hohlzylindrischen Kern 2. Das Brennstoffeinspritzventil eignet sich besonders zum direkten Einspritzen von Brennstoff in einen Brennraum einer Brennkraftmaschine. Ein beispielsweise gestufter Spulenkörper 3 nimmt eine Bewicklung der Magnetspule 1 auf und ermöglicht in Verbindung mit dem Kern 2 und einem ringförmigen, nichtmagnetischen, von der Magnetspule 1 teilweise umgebenen Zwischenstück 4 mit einem L-förmigen Querschnitt einen besonders kompakten und kurzen Aufbau des Einspritzventils im Bereich der Magnetspule 1.

In dem Kern 2 ist eine durchgängige Längsöffnung 7 vorgesehen, die sich entlang einer Ventillängsachse 8 erstreckt. Der Kern 2 mit seiner Längsöffnung 7 dient u.a. als Brennstoffzufuhrkanal, wobei er zusammen mit einem oberen metallenen, z. B. ferritischen Gehäuseteil 14 einen Brennstoffeinlaßstutzen bildet. Das Gehäuseteil 14 bildet das zulaufseitige Ende des Brennstoffeinspritzventils und umhüllt den Kern 2 zumindest teilweise in axialer Richtung. Neben dem oberen Gehäuseteil 14 sind beispielsweise zwei weitere Gehäuseteile 16, 18 vorgesehen, wobei das mittlere Gehäuseteil 16 in Form eines Deckelelements ausgebildet ist.

Als Deckelelement begrenzt das mittlere Gehäuseteil 16 den Spulenraum der Magnetspule 1 nach oben hin. An das mittlere Gehäuseteil 16 schließt sich das untere Gehäuseteil 18 an, das mit dem mittleren Gehäuseteil 16 fest verbunden ist, die Magnetspule 1 radial umschließt, das Zwischenstück 4 untergreift und teilweise als Führung für ein axial bewegliches Ventilteil dient. Das untere Gehäuseteil 18 umschließt teilweise einen langgestreckten Ventilsitzkörper 21, der eine innere Durchgangsöffnung 24 besitzt, in der das axial bewegliche Ventilteil bestehend aus einem Anker 19 und einer Ventilnadel 20 weitgehend aufgenommen ist. Die beiden Gehäuseteile 16 und 18 sind z. B. mit einer Schweißnaht fest miteinander verbunden.

In dem in Figur 1 dargestellten Ausführungsbeispiel sind das untere Gehäuseteil 18 und der weitgehend rohrförmige Ventilsitzkörper 21 durch Verschrauben fest miteinander verbunden; Schweißen oder Löten stellen aber ebenso mögliche Fügeverfahren dar. Die Abdichtung zwischen dem Gehäuseteil 18 und dem Ventilsitzkörper 21 erfolgt z. B. mittels eines Dichtrings 22. Die innere Durchgangsöffnung 24 des Ventilsitzkörpers 21, die konzentrisch zu der Ventillängsachse 8 verläuft, erstreckt sich über dessen gesamte axiale Länge, wobei sich der Querschnitt der Durchgangsöffnung 24 aufgrund verschiedener Stufen in stromabwärtiger Richtung immer weiter verkleinert. An seinem unteren Ende 25, das auch zugleich den stromabwärtigen Abschluß des gesamten Brennstoffeinspritzventils darstellt, bildet eine konisch verlaufende Wandung der Durchgangsöffnung 24 des Ventilsitzkörpers 21 einen Ventilsitz 26. Die Durchgangsöffnung 24 endet stromabwärts des Ventilsitzes 26 als eine Austrittsöffnung 27 für den Brennstoff mit vergleichsweise geringem Durchmesser. In der Durchgangsöffnung 24 ist die z. B. stangenförmige, einen kreisförmigen Querschnitt aufweisende Ventilnadel 20 angeordnet, die an ihrem stromabwärtigen Ende einen Ventilschließabschnitt 28 aufweist. Dieser sich keglig verjüngende Ventilschließabschnitt 28 wirkt in bekannter Weise mit dem sich in Strömungsrichtung kegelstumpfförmig verjüngenden Ventilsitz 26 als Sitzventil zusammen.

In der Durchgangsöffnung 24 des Ventilsitzkörpers 21 ist zumindest in deren an den Ventilsitz 26 stromaufwärts angrenzenden Abschnitt ein erfindungsgemäßer hülsenförmiger Dralleinsatz 30 angeordnet, dessen Außendurchmesser geringfügig kleiner ist als der jeweilige Durchmesser der Durchgangsöffnung 24, so daß dieser Zwischenbereich von Brennstoff durchströmt werden kann. Der im Ventilsitzkörper 21 eingepaßte Dralleinsatz 30 besitzt einen oberen radial überstehenden Kragen 31, mit dem der Dralleinsatz 30 fest auf einer inneren Schulter 32 des Ventilsitzkörpers 21 aufsitzt. Der Dralleinsatz 30 weist wiederum eine innere Längsöffnung 33 auf, in der sich die Ventilnadel 20 entlang bewegt, wobei ein speziell ausgebildeter innerer Führungsbereich für die Ventilnadel 20 ausgebildet sein kann. Eine gehäusefest abgestützte Schraubenfeder 34 liegt z.B. an der der Schulter 32 gegenüberliegenden Seite des Kragens 31 an und sorgt so für ein Anpressen des Dralleinsatzes 30 am Ventilsitzkörper 21, wodurch ein axiales Verrutschen des Dralleinsatzes 30 vermieden wird. Anhand der nachfolgenden Figuren wird der Dralleinsatz 30 noch näher beschrieben.

Die Betätigung des Einspritzventils erfolgt in bekannter Weise elektromagnetisch. Zur axialen Bewegung der Ventilnadel 20 und damit zum Öffnen entgegen der Federkraft einer im Inneren der Hülse 10 angeordneten Rückstellfeder 35 bzw. Schließen des Einspritzventils dient der elektromagnetische Kreis u.a. mit der Magnetspule 1, dem Kern 2 und dem Anker 19. Der Anker 19 ist mit dem dem Ventilschließabschnitt 28 abgewandten Ende der Ventilnadel 20 z. B. durch eine Schweißnaht verbunden und auf den Kern 2 ausgerichtet. Während der Axialbewegung wird der Anker 19 in dem nichtmagnetischen Zwischenstück 4 geführt.

In die innere Längsöffnung 7 des Kerns 2 ist eine Einstellhülse 38 eingeschoben, eingepreßt oder eingeschraubt. Die Einstellhülse 38 dient zur Einstellung der Federvorspannung der an der Einstellhülse 38 anliegenden Rückstellfeder 35, die sich mit ihrer gegenüberliegenden Seite an dem mit der Ventilnadel 20 verbundenen Anker 19 abstützt. Im Anker 19 sind ein oder mehrere ringförmige oder bohrungsähnliche Strömungskanäle 40 vorgesehen, durch die der Brennstoff von der Längsöffnung 7 aus bis in die Durchgangsöffnung 24 entlang der Ventilnadel 20 gelangen kann. In die Längsöffnung 7 ragt zulaufseitig ein Brennstoffilter 42 hinein, der für die Herausfiltrierung solcher Brennstoffbestandteile sorgt, die aufgrund ihrer Größe im Einspritzventil Verstopfungen oder Beschädigungen verursachen könnten. Der Brennstoffilter 42 ist z. B. durch Einpressen im oberen Gehäuseteil 14 fixiert.

Eine Endstellung der Ventilnadel 20 ist bei nicht erregter Magnetspule 1 durch die Anlage des Ventilschließabschnitts 28 der Ventilnadel 20 am Ventilsitz 26 festgelegt, während sich die andere Endstellung der Ventilnadel 20 bei erregter Magnetspule 1 durch die Anlage des Ankers 19 an dem Kern 2. Die Oberflächen der Bauteile in diesem Anschlagbereich sind beispielsweise verchromt.

Die elektrische Kontaktierung der Magnetspule 1 und damit deren Erregung erfolgt über Kontaktelemente 43, die auch außerhalb des eigentlichen Spulenkörpers 3 aus Kunststoff noch mit einer Kunststoffumspritzung 45 versehen sind. Das deckelartige mittlere Gehäuseteil 16 besitzt an einer Stelle seines Umfangs eine schlitzförmige Aussparung, und zwar genau im Bereich der Durchführung der Kontaktelemente 43. Die die Kontaktelemente 43 umhüllende Kunststoffumspritzung 45 ragt somit durch diese Aussparung im Gehäuseteil 16, wie es auf der linken Seite der Figur 1 erkennbar ist. Aus der Kunststoffumspritzung 45 heraus verläuft ein elektrisches Anschlußkabel 44, über das die Bestromung der Magnetspule 1 erfolgt.

In der Figur 2 ist der mit II in Figur 1 gekennzeichnete abspritzseitige Endbereich des Brennstoffeinspritzventils nochmals vergrößert dargestellt, um insbesondere die Struktur des Dralleinsatzes 30 und die Strömungsverhältnisse in der Durchgangsöffnung 24 des Ventilsitzkörpers 21 zu verdeutlichen. Der Brennstoff strömt aus dem der Magnetspule 1 zugewandten oberen Abschnitt der Durchgangsöffnung 24 kommend im Bereich des Kragens 31 in den Dralleinsatz 30 ein. Im Dralleinsatz 30 ist zwischen dem Außendurchmesser der Ventilnadel 20 und der Wandung der Längsöffnung 33 zunächst ein ringförmiger Zwischenraum 47 gebildet, der nachfolgend durchströmt wird. In einem dem Kragen 31 stromabwärts folgenden oberen Abschnitt 48 des Dralleinsatzes 30 sind beispielsweise mehrere in zwei axialen Ringbereichen angeordnete, die Wandung radial durchdringende Queröffnungen 49 vorgesehen, durch die der Brennstoff vom Zwischenraum 47 her nach außerhalb des Dralleinsatzes 30 austreten kann.

Aus den Queröffnungen 49 ausgeströmt gelangt der Brennstoff in einem Ringraum 50 zwischen dem Außendurchmesser des Dralleinsatzes 30 und der Wandung der Durchgangsöffnung 24 des Ventilsitzkörpers 21 axial stromabwärts in Richtung zum Ventilsitz 26. Ein umströmter unterer Abschnitt 51 des Dralleinsatzes 30 weist z.B. vier abgeflachte Anschliffsflächen 52 auf, so daß der Dralleinsatz 30 in seinem unteren Abschnitt 51 eine weitgehend vierkantförmige Außenkontur besitzt, was besonders in Figur 4 deutlich wird. Die innere Längsöffnung 33 im unteren Abschnitt 51 ist mit einem derartigen Durchmesser als Führungsöffnung 53 versehen, daß die Ventilnadel 20 in ihr geführt wird. Der Abschnitt 51 kann jedoch z.B. auch dreikant- oder sechskantförmig sein.

An diesen vierkantförmigen Abschnitt 51 schließt sich dem Kragen 31 abgewandt ein unterer Drallbereich 54 an, der mit einer konischen, sich in stromabwärtiger Richtung verjüngenden Außenkontur ausgebildet ist. Dieser Drallbereich 54 sitzt dabei oberhalb des Ventilsitzes 26 auf der in diesem Bereich ebenfalls konisch verlaufenden Wandung der Durchgangsöffnung 24 auf. Von der konischen Außenkontur ausgehend verlaufen mehrere, beispielsweise vier Drallnuten 56 im Drallbereich 54 radial zur inneren Längsöffnung 33. Die z.B. mittels Schleifen eingebrachten und parallel zum konischen Ventilsitz 26 verlaufenden Drallnuten 56 sind durch ihre Anordnung in dem unteren Drallbereich 54 zur unteren Stirnfläche 57 des Dralleinsatzes 30 hin offen und sind somit stirnseitige Kanäle. Bedingt durch die Exzentrizität der Drallnuten 56 und die tangentiale Ausrichtung zur inneren Längsöffnung 33, die in diesem Bereich eine gewisse Drallkammer bildet, wird der Strömung bei ihrem Austritt aus der jeweiligen Drallnut 56 eine Drallkomponente aufgezwungen. So lassen sich in idealer Weise bestimmte geforderte Parameter wie Strahlverteilung und Tröpfchengröße genau erzielen. Durch das Abheben des Ventilschließabschnitts 28 der Ventilnadel 20 vom Ventilsitz 26 bei erregter Magnetspule 1 wird der Brennstoff entsprechend in die Austrittsöffnung 27 freigegeben und dann aus dem Brennstoffeinspritzventil abgegeben.

In Figur 3 ist der erfindungsgemäße Dralleinsatz 30 in aus Figur 2 bekannter Weise nochmals als Einzelbauteil dargestellt. Eine Unteransicht auf den Dralleinsatz 30 in Figur 3 zeigt die Figur 4. In Figur 4 wird besonders deutlich, daß der untere Abschnitt 51 des Dralleinsatzes 30 beispielsweise mit vier jeweils senkrecht zueinander stehenden Anschliffsflächen 52 versehen ist, so daß eine insgesamt weitgehend vierkantförmige Kontur gebildet ist. Von diesen vier Anschliffsflächen 52 ausgehend sind die vier Drallnuten 56 im Drallbereich 54 eingebracht, die in die innere Längsöffnung 33 münden. Der Verlauf der Drallnuten 54 ist bezüglich der Längsöffnung 33 z.B. tangential. Im Querschnitt sind die Drallnuten 56 z.B. tunnelportalähnlich gewölbt.

Anstelle der in den Figuren 2 bis 4 gezeigten Drallnuten 56 können auch Drallöffnungen 56 in Form von nicht dargestellten Drallbohrungen im unteren Drallbereich 54 ausgeformt sein. Ebenso wie die näher beschriebenen Drallnuten 56 verlaufen auch diese Drallbohrungen parallel zum konischen Ventilsitz 26. Als Drallbohrungen besitzen diese Drallöffnungen jedoch eine Wandung zur konischen Außenkontur des Drallbereichs 54 hin, wobei die Wandstärke im Bereich von 0,2 bis 0,5mm liegt. Die Drallbohrungen enden ebenfalls an der unteren Stirnfläche 57 des Dralleinsatzes 30.

Figur 5 zeigt eine alternative Ausführungsform des unteren Abschnitts 51 des Dralleinsatzes 30. Dabei liegt hauptsächlich die konische Außenkontur des Drallbereichs 54 modifiziert vor. Während bei dem in den Figuren 2 und 3 gezeigten Ausführungsbeispiel der Übergang vom Abschnitt 51 zum Drallbereich 54 in der Außenkontur ohne Stufe oder Absatz erfolgt, ist bei dem in Figur 5 dargestellten Ausführungsbeispiel in diesem Übergangsbereich eine Dichtkante 58 ausgebildet, die einen zum Abschnitt 51 beispielsweise senkrecht verlaufenden Absatz darstellt. Die eine hohe Dichtheit garantierende Dichtkante 58 liegt im eingebauten Zustand an der Innenwandung des Ventilsitzkörpers 21 oberhalb des Ventilsitzes 26 an.

## Patentansprüche

1. Brennstoffeinspritzventil für Brennstoffeinspritzanlagen von Brennkraftmaschinen, insbesondere zum direkten Einspritzen von Brennstoff in einen Brennraum einer Brennkraftmaschine, mit einer Betätigungseinrichtung (1, 2, 19), mit der eine Ventilnadel (20) axial bewegbar ist, wobei die Ventilnadel (20) einen Ventilschließabschnitt (28) aufweist, mit einem Ventilsitzkörper (21), an dem ein Ventilsitz (26) ausgebildet ist, mit dem der Ventilschließabschnitt (28) zusammenwirkt, mit einem Dralleinsatz (30), der eine innere Längsöffnung (33) für die Ventilnadel (20) und Drallerzeugungsmittel (56) für den. Brennstoff stromaufwärts des Ventilsitzes (26) sowie eine untere Stirnfläche (57) aufweist, wobei der Dralleinsatz (30) an seinem stromabwärtigen Ende einen Drallbereich (54) besitzt, der an seiner Außenkontur konisch ausgeformt ist und bis zu der Längsöffnung (33) verlaufend mehrere schräg geneigte Drallöffnungen (56) aufweist, die sich bis hin zu der unteren Stirnfläche (57) erstrecken, **dadurch gekennzeichnet, dass** die Längsöffnung (33) des Dralleinsatzes (30) in einem oberen Abschnitt (48) einen Durchmesser besitzt, der größer ist als der Außendurchmesser der Ventilnadel (20), so dass ein von Brennstoff durchströmbarer ringförmiger Zwischenraum (47) gebildet ist.

2. Brennstoffeinspritzventil nach Anspruch 1, **dadurch gekennzeichnet, dass** in dem oberen Abschnitt (48) des Dralleinsatzes (30) mehrere die Wandung radial durchdringende Queröffnungen (49) eingebracht sind, durch die Brennstoff von dem Zwischenraum (47) in einen zwischen Ventilsitzkörper (21) und Dralleinsatz (30) gebildeten Ringraum (50) strömen kann.

3. Brennstoffeinspritzventil nach Anspruch 1 oder 2, **dadurch gekennzeichnet, dass** der Ventilsitz (26) konisch ausgebildet ist und die Drallöffnungen (56) parallel zu dem Ventilsitz (26) verlaufen.

4. Brennstoffeinspritzventil nach einem der vorhergehenden Ansprüche, **dadurch gekennzeichnet, dass** die Drallöffnungen als Drallnuten (56) ausgeformt sind, die zu der konischen Außenkontur und zu der unteren Stirnfläche (57) hin offen sind.

5. Brennstoffeinspritzventil nach einem der Ansprüche 1 bis 3, **dadurch gekennzeichnet, dass** die Drallöffnungen (56) als Drallbohrungen ausgeformt sind, die mit einer Wandstärke von 0,2 bis 0,5mm von der konischen Außenkontur beabstandet sind.

6. Brennstoffeinspritzventil nach Anspruch 1, **dadurch gekennzeichnet, dass** der Dralleinsatz (30) einen dem Drallbereich (54) abgewandten oberen Kragen (31) besitzt, der auf einer Schulter (32) des Ventilsitzkörpers (21) aufsitzt.

7. Brennstoffeinspritzventil nach einem der vorhergehenden Ansprüche, **dadurch gekennzeichnet, dass** ein dem Drallbereich (54) zugewandter unterer Abschnitt (51) des Dralleinsatzes (30) aufgrund von Anschliffsflächen (52) eine weitgehend vierkantförmige Außenkontur aufweist.

8. Brennstoffeinspritzventil nach einem der vorhergehenden Ansprüche, **dadurch gekennzeichnet, dass** die Außenkontur des Drallbereichs (54) absatzlos konisch verläuft.

9. Brennstoffeinspritzventil nach einem der Ansprüche 1 bis 7, **dadurch gekennzeichnet, dass** an der Außenkontur des Drallbereichs (54) eine zur konischen Kontur abgewinkelte Dichtkante (58) ausgebildet ist.

10. Brennstoffeinspritzventil nach Anspruch 4, **dadurch gekennzeichnet, dass** die Drallnuten (56) mittels Schleifen herstellbar sind.

## Claims

1. Fuel injection valve for fuel injection systems of internal combustion engines, in particular for the direct injection of fuel into a combustion space of an internal combustion engine, with an actuating device (1, 2, 19) by means of which a valve needle (20) can be moved axially, the valve needle (20) having a valve-closing portion (28), with a valve-seat body (21), on which is formed a valve seat (26), with which the valve-closing portion (28) cooperates, and with a swirl insert (30) which has an inner longitudinal orifice (33) for the valve needle (20) and swirl generation means (56) for the fuel upstream of the valve seat (26), and also a lower end face (57), the swirl insert (30) possessing, at its downstream end, a swirl region (54) which is shaped conically on its outer contour and has, running as far as the longitudinal orifice (33), a plurality of obliquely inclined swirl orifices (56) which extend as far as the lower end face (57), **characterized in that** the longitudinal orifice (33) of the swirl insert (30) possesses in an upper portion (48) a diameter which is greater than the outside diameter of the valve needle (20), so that an annular interspace (47), through which fuel is capable of flowing, is formed.

2. Fuel injection valve according to Claim 1, **characterized in that** in the upper portion (48) of the swirl insert (30) are introduced a plurality of transverse orifices (49) which pass radially through the wall and through which the fuel can flow from the interspace (47) into an annular space (50) formed between the valve-seat body (21) and the swirl insert (30).

3. Fuel injection valve according to Claim 1 or 2, **characterized in that** the valve seat (26) is designed conically and the swirl orifices (56) run parallel to the valve seat (26).

4. Fuel injection valve according to one of the preceding claims, **characterized in that** the swirl orifices are shaped as swirl grooves (56) which are open towards the conical outer contour and towards the lower end face (57).

5. Fuel injection valve according to one of Claims 1 to 3, **characterized in that** the swirl orifices (56) are shaped as swirl bores which are spaced apart from the conical outer contour by a wall thickness of 0.2 to 0.5 mm.

6. Fuel injection valve according to Claim 1, **characterized in that** the swirl insert (30) possess an upper collar (31) which faces away from the swirl region (54) and which sits on a shoulder (32) of the valve-seat body (21).

7. Fuel injection valve according to one of the preceding claims, **characterized in that** a lower portion (51) of the swirl insert (30), the said lower portion facing the swirl region (54), has a largely square outer contour by virtue of ground-down surfaces (52).

8. Fuel injection valve according to one of the preceding claims, **characterized in that** the outer contour of the swirl region (54) runs conically without steps.

9. Fuel injection valve according to one of Claims 1 to 7, **characterized in that** the outer contour of the swirl region (54) has formed on it a sealing edge (58) angled to the conical contour.

10. Fuel injection valve according to Claim 4, **characterized in that** the swirl grooves (56) can be produced by means of grinding.

## Revendications

1. Injecteur de carburant pour installations d'injection de carburant de moteurs à combustion interne, en particulier pour l'injection directe de carburant dans la chambre de combustion d'un moteur à combustion interne, comportant un dispositif d'actionnement (1, 2, 19) qui peut déplacer une aiguille (20) dans le sens axial, l'aiguille (20) présentant une section de fermeture de soupape (28), avec un corps de siège de soupape (21) sur lequel est formé un siège de soupape (26) avec lequel la section de fermeture de soupape (28) coopère, avec un insert à tourbillon (30) qui présente une ouverture longitudinale intérieure (33) pour l'aiguille (20) et un organe créateur à tourbillon (56) pour le carburant en amont du siège de soupape (26) ainsi qu'une face frontale inférieure (57), l'insert à tourbillon (30) possédant sur son extrémité aval une zone à tourbillon (54) de contour extérieur en forme de cône et qui présente plusieurs ouvertures à tourbillon (56) inclinées en biais jusqu'à l'ouverture longitudinale (33), qui s'étendent jusqu'à la face frontale inférieure (57),
**caractérisé en ce que**
l'ouverture longitudinale (33) de l'insert à tourbillon (30) possède dans une section supérieure (48) un diamètre plus grand que le diamètre extérieur de l'aiguille (20), de façon à former un espace intermédiaire annulaire (47) pouvant être traversé par le carburant.

2. Injecteur de carburant selon la revendication 1,
**caractérisé en ce que**
dans la section supérieure (48) de l'insert à tourbillon (30) figurent plusieurs ouvertures transversales (49) traversant dans le sens radial la paroi, par lesquelles le carburant peut s'écouler de l'espace intermédiaire (47) dans un espace annulaire (50) formé entre le corps de siège de soupape (21) et l'insert à tourbillon (30).

3. Injecteur de carburant selon la revendication 1 ou 2,
**caractérisé en ce que**
le siège de soupape (26) est de forme conique et les ouvertures à tourbillon (56) sont parallèles au siège de soupape (26).

4. Injecteur de carburant selon l'une quelconque des revendications précédentes,
**caractérisé en ce que**
les ouvertures à tourbillon ont la forme de rainures à tourbillon (56) ouvertes vers le contour extérieur conique et vers la face frontale inférieure (57).

5. Injecteur de carburant selon l'une quelconque des revendications 1 à 3,
**caractérisé en ce que**
les ouvertures à tourbillon (56) ont la forme de perçages à tourbillon espacés du contour extérieur conique par une épaisseur de paroi de 0,2 à 0,5 mm.

6. Injecteur de carburant selon la revendication 1,
**caractérisé en ce que**
l'insert à tourbillon (30) possède un collet supérieur (31) détourné de la zone à tourbillon (54) qui repose sur un épaulement (32) du corps de siège de soupape (21).

7. Injecteur de carburant selon l'une quelconque des revendications précédentes,
**caractérisé en ce qu'**
une section inférieure (51) de l'insert à tourbillon (30) dirigée vers la zone à tourbillon (54) présente, en raison de surfaces polies (52), un contour extérieur sensiblement carré.

8. Injecteur de carburant selon l'une quelconque des revendications précédentes,
**caractérisé en ce que**
le contour extérieur de la zone à tourbillon (54) est conique et ne comporte pas de décrochements.

9. Injecteur de carburant selon l'une quelconque des revendications 1 à 7,
**caractérisé en ce que**
sur le contour extérieur de la zone à tourbillon (54), une arête d'étanchéité (58) décalée par rapport au contour conique est formée.

10. Injecteur de carburant selon la revendication 4,
**caractérisé en ce que**
les rainures à tourbillon (56) peuvent être réalisées par meulage.
